# EUROPEAN PATENT SPECIFICATION

(11) **EP 1 873 328 B1**
(45) Date of publication and mention of the grant of the patent: **19.10.2011**
(21) Application number: 07012356.7
(22) Date of filing: 25.06.2007
(51) Int. Cl.: E04G 21/04, G01M 5/00

(54) **Test bed for distributing arms for distributing concrete and test method for testing such distributing arms**
Prüfstand für Verteilerarme zum Verteilen von Beton und Prüfverfahren zum Prüfen eines Verteilerarms
Banc d'essai pour bras de distributeur de béton, et procédé de test pour tester de tels bras

(30) Priority: 28.06.2006 IT MI20061249
(43) Date of publication of application: 02.01.2008
(73) Proprietor: Cifa S.P.A., 20030 Senago, Milano (IT)
(72) Inventor: Cipolla, Davide, 22063 Cantù(CO) (IT); Pirri, Nicola, 20146 Milano (IT); Cortellini, Mauro, 20089 Rozzano (MI) (IT); Resta, Ferruccio, 20123 Milano (IT); Tosi, Alessandro, 20146 Milano (IT)
(74) Representative: Ligi, Stefano

(56) References cited:
- EP-A- 1 416 259
- RU-C1- 2 052 787
- US-A- 1 595 160
- US-A- 3 871 213
- US-A- 5 872 318

## Description

This invention refers to a test bed for distributing arms for distributing concrete, of the type used, for example, in movable vehicle-mounted pumps. The invention also refers to a method for conducting the test on a distributing arm for distributing the concrete.

For some time in the prior art making jointed distributing arms for distributing concrete has been known, comprising a plurality of portions serially connected together in a jointed manner. The arm may, for example, comprise five different portions and reach a total length of 30-40 m.

Along the entire extent thereof, the arm carries a pipe inside which the concrete flows that was pumped in use during casting.

The first portion of the arm is connected to a turret intended for being fixed to the frame of a vehicle if the distributing arm is associated with a movable vehicle crane.

In the course of the working life of the arm, which may be around 10 years, the arm operates for numerous concrete distribution cycles. The various components of the arm are subjected to a cyclical sequence of mechanical stress.

During casting the arm can be configured in various ways, with different extending positions to be able to adapt to the various needs that may arise on the work site. A different mechanical load on the arm corresponds to each cast configuration.

In the event of constructional faults, for some operational configurations following a certain number of work cycles structural failings of the arm structure may occur, in particular at the level of the joints, with very negative consequences both in terms of machine productivity and operator safety.

The general object of the present invention is to overcome the aforesaid drawbacks by providing a test bed for distributing arms for distributing concrete that is able to test the arm in such a way as to ensure effective and reliable operation throughout the working life thereof.

A further object of the invention is to provide a rapid and cheap method for testing a distributing arm that enables effective and reliable operation thereof throughout the working life thereof to be ensured.

In view of this object, it was decided to devise, according to the invention, a test bed for distributing arms for distributing concrete of the type comprising a plurality of portions serially connected to one another in a jointed manner with an end portion of the arm connected in a jointed manner to a turret of the arm, the test bed comprising a supporting structure on which the turret of the arm is fixable during the test and active forcing means suitable for applying at least one transverse force with respect to the arm being tested to generate a preset bending moment in at least one reference section of the arm.

Still according to the invention, it was decided to provide a method for testing a distributing arm for distributing concrete of the type comprising portions serially connected to one another in a jointed manner with an end portion connected in a jointed manner to a turret of the arm, the method comprising the steps of providing a test bed comprising a supporting structure, fixing said turret to said supporting structure and applying to the arm in a cyclical manner at least one force that is transverse to the extent of the extended arm so as to cause a preset bending moment in at least one reference section of the arm.

In order to make the explanation of the innovative principles of the present invention and the advantages thereof clearer compared with the prior art, with the help of attached drawings a possible embodiment will be disclosed below by way of example. In the drawings:
- figure 1 is a side view of a bed according to the invention during the forcing phase of the last joint of the distributing arm,
- figure 2 is a further side view of the test bed of the preceding figure, configured for forcing the penultimate joint of the arm,
- figure 3 is another view of the bed of the previous figures, configured for forcing the joint of the arm between the first portion and the turret,
- figure 4 shows a side view of the test bed configured for applying several active forces on the arms simultaneously,
- figure 5 is a detailed view of a joint of the distributing arm,
- figure 6 is a plan view of an alternative embodiment of a test bed according to the invention.

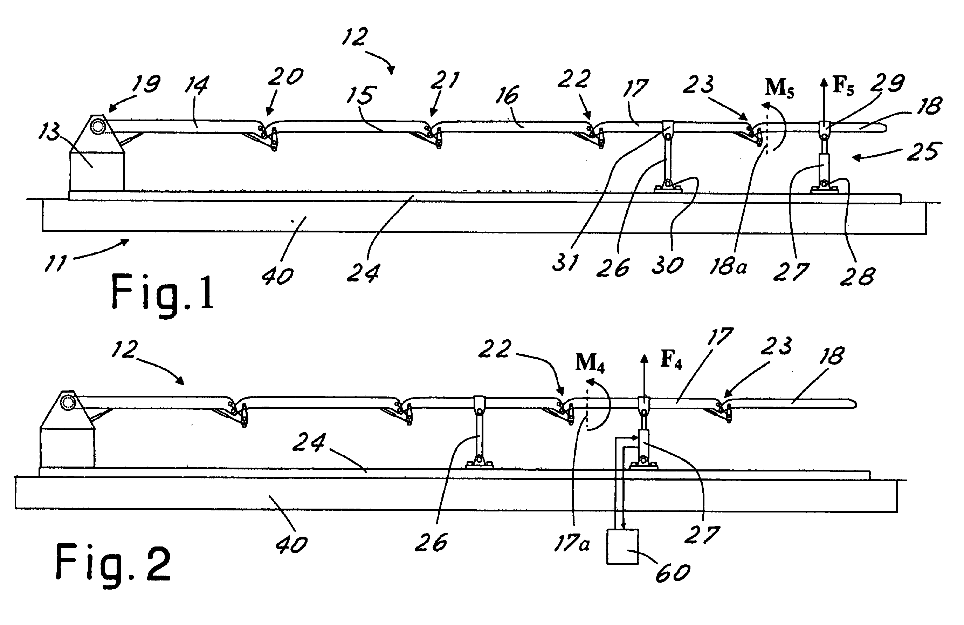

With reference to the figures, in figure 1 there is shown a test bed 11 in a test phase of a distributing arm for distributing the concrete 12.

The arm 12 comprises five portions 14-18 serially connected in a jointed manner by means of joints 20-23. In particular, the joint 20 connects the first portion 14 to the second portion 15, the joint 21 connects the second portion 15 to the third portion 16 and so on until the joint 23 that connects the fourth portion 17 to the last portion 18.

The first portion 14 is connected to a turret 13 by means of a joint 19.

The arm 12, which is *per* se made according to the prior art, supports a distributing pipe for distributing the concrete along the entire extent thereof (not shown in the figure) and may be a few dozen metres long (up to 30-40 m).

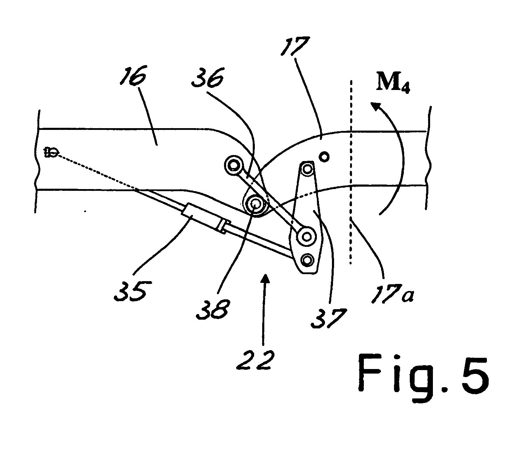

Figure 5 shows an enlargement of the joint 22, as an example of a known joint used for connecting adjacent portions of the arm.

The joint 22 comprises a hinge 38 between the portion 16 and the portion 17, transverse to the extent of the arm. A connecting rod 36 is connected on one side to the portion 16 and on the other side to the element 37, which is hinged on the portion 17 and on the piston of the actuating cylinder 35 in the manner shown in the figure. The cylinder 35 is connected between the element 37 and the portion 16 to rotate the portion 17 with respect to the portion 16 around the hinge 38.

The various joints of the arm enable reciprocal rotations of the portions around axes pointing in the same direction, according to known techniques.

The test bed 11 comprises a supporting structure 24, 40 to which the turret 13 of the arm and also other active forcing means 25 are connected that are suitable for applying a force that is transverse to the arm 12. The active force is applied in such a way as to generate along the arm bending moment with the axis parallel to the rotation axis of the joints.

The active forcing means comprises at least one actuator 27 connected mechanically during the test between the supporting structure and the arm to be tested.

The supporting structure comprises a straight rail 24 to an end of which the turret 13 is connected that extends parallel to the arm 12.

According to an embodiment of the invention, the arm 12, during the test phase, is kept horizontal.

The rail 24 is preferably anchored to a base 40 made with a reinforced concrete cast and is dimensioned so as to support the stress that extends from the arm to the rail 24 during the test.

The actuator 27 is connected mechanically between a preset section of the arm 12 and the supporting structure of the test bed (in particular the rail 24).

The actuator 27 can be made according to any known technique, for example with a hydraulic cylinder or with an electromechanical actuator. A rotating motor fixed to the rail 24 could also be used that is suitable for tensioning a tie rod anchored on the arm.

Advantageously, the actuator 27 applies to the arm a force directed vertically upwards. As will be seen, this solution enables the traction stress to be limited at the attachment of the turret 13 to the supporting structure 24-40 for some test configurations like the one shown in figure 1. This enables the cost to be limited that is linked to the dimensioning of the supporting structure of the test bed 11.

The concrete-distributing arm has to have a working life of several years, typically about ten years.

Over the working life of the arm, it faces a sequence of operating cycles. During each operating cycle, depending on the work-site operating requirements, the arm is extended and configured in a different manner and thus undergoes different mechanical stresses, due both to the weight thereof and to the weight of the concrete that is pumped in the distribution piping.

In a jointed arm of the type used in the field in question, the most mechanically critical points are the joints. Each joint can be can be stressed in use in both directions, i.e. with bending moments in different directions.

It has therefore been found to be particularly advantageous to perform the arm test by causing a preset bending moment cyclically at a reference section of the arm near the joints, in such a way as to vary cyclically the bending stress between a positive value (which tends to close the joint in the bending direction of the arm) and a negative value (which tends to open the joint).

For example, the reference section at which it is desired to obtain preset cyclical stress can be the section 18a of the portion 18 for the joint 23 in figure 1.

The force imposed by the active forcing means 25 is such as to make the bending moment in the reference section near the joint (or the joints) oscillate between two preset values, advantageously mutually opposite values. The oscillation frequency of the stress may be comprised between 0.01 Hz and 10 Hz, preferably between 0.05 and 2 Hz, depending on the test configuration that it is desired to implement.

The test is conducted dry, i.e. in the absence of concrete in the distribution pipes.

The maximum values of the total bending moment in the two opposite directions on the various joints during the test could be, approximately, comprised between 70% and 120% of the maximum value that the joint may have to bear in practice in the maximum mechanical stress configuration (i.e. with the arm extended horizontally).

In the example of the test phase shown in figure 1, the joint 23 is tested by positioning a sole actuator 27 at the height of the fifth portion 18 (near the centre of gravity thereof) and a connecting element 26 (a rod) at the height of the preceding adjacent portion in the direction of the turret 13.

The actuator 27 is fixed to the rail 24 through adjustable fixing means 28 and to the arm through fixing means 29.

Similarly, the rod 26 is fixed to the rail 24 and to the portion 17 with similar fixing means 30, 31.

The ends of the cylinder 27 and of the rod 26 are connected to the rail and arm through a hinge with an axis that is transverse to the extent of the arm. In the event of deformation of the arm during the test, in this way the tilt of the cylinder 27 and the rod 26 may possibly vary slightly.

The actuator 27 applies a force F₅ vertically facing upwards to the portion 18, so as to generate on the reference section 18a a bending moment M₅ facing the direction shown in the figure, i.e. in a negative direction tending to open the joint.

In order to obtain the overall moment on the reference section, the bending moment always present on the section 18a due to the weight of the arm in a horizontal position must be added to the moment M₅ generated by the active force.

The active force applied by the active forcing means varies between a maximum value and a zero value during a test cycle.

In the absence of the force F₅ at the section 18a there is obtained exclusively the positive bending moment M_{5P} (not shown) that is due to the weight of the portion 18 in the direction opposite M₅, which is applied by the active force.

Therefore, during the test the moment with which the joint 23 is stressed varies cyclically between M_{5P} and (M_{5P}-M₅). The value M₅ could be greater than M_{5P}, in such a way as to simulate an opposite stress that the joint can bear in determined operating conditions of the arm.

Advantageously, the test may involve more than 50,000 forcing cycles, for example 100,000. In each cycle, the preset force applied by the active forcing means takes the form of a sine curve.

The test frequency for the single joint tested as in figure 1 could be equal to 0.5 Hz with a total test time of approximately 3 days. It should be noted that the great test frequency that is possible is due to the low deformation that the arm undergoes with the test configuration of figure 1, which enables a stability condition to be reached in a short time from the moment in which the active force is applied.

The presence of the connecting member 26 enables the propagation of bending stress on the portions upstream of the joint to be limited during the test phase (in the case of figure 1, the joint 23). The total deformation of the arm is particularly reduced and also the stroke of the actuator 27 is reduced therewith.

Once the test has been conducted on the joint 23 by applying an oscillating force for three days in a row, the positions of the actuator 27 and of the connecting member 26 are recorded in such a way as to obtain the configuration shown in figure 2, in which the test bed 11 is configured for testing the joint 22. The actuator 27 is applied at the centre of gravity of the portion 17 and the connection rod 26 to the centre of gravity of the third portion 16.

The actuator will apply an upwardly facing force F₄ to generate a bending moment M₄ at the section 17a of the arm immediately downstream of the joint 22. The force F₄ has a greater force than force F₅. In fact, the bending moment M_{4P} due to the weight of the portions downstream of the section 17a is greater than M_{5P}, so that in order to generate an inverted (or negative) bending moment on the joint a more intense force is necessary.

Purely by way of example, in order to give an order of magnitude, the force F₅ could be the same as 10 kN, whilst F₄ could be the same as 25 kN, for an arm with five portions that is approximately 30-35 metres long like the one shown in the figure.

Also in this case the frequency of the application cycle of the force may be 0.5 Hz for 100,000 cycles and 3 days of tests.

Similarly, first the joint 21 and then the joint 20 are tested, naturally with force of greater intensity so as to compensate for the greater bending moment induced by the weight of the portions downstream of the joints being tested.

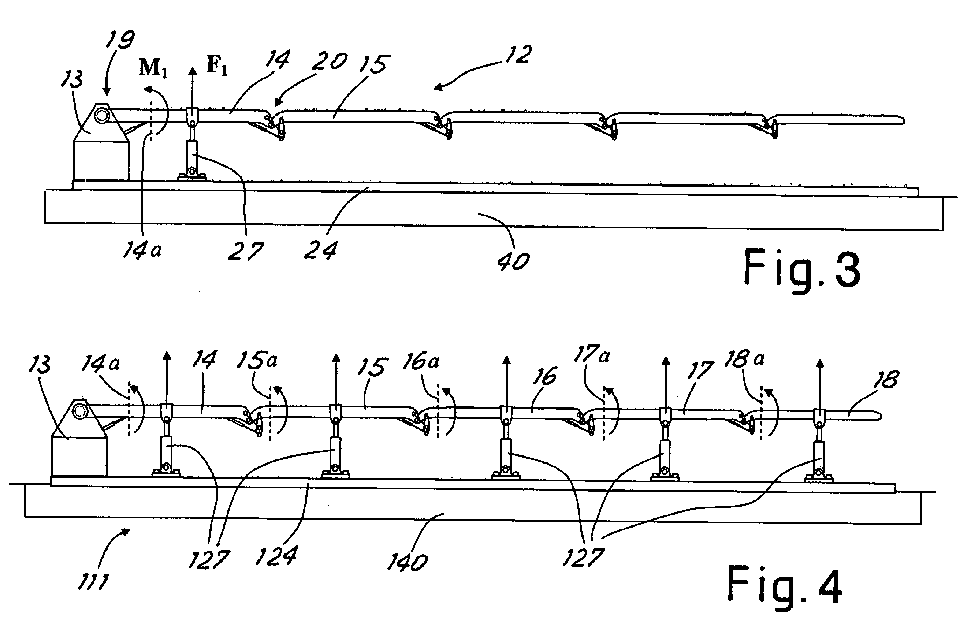

As a last phase of the test the joint 19 between the turret 13 and the first portion of the arm 14 (fig. 3) is tested.

In this case it is not necessary to apply the connecting member 26, but it is sufficient to arrange the actuator 27 at the centre of gravity of the first portion 14, as shown in figure 3.

This test method enables the various joints to be tested separately, preventing a failure of one of them from compromising the tests of the remaining joints. The total duration of the test is approximately 15 days, 3 days for each joint of the arm.

Alternatively, it is possible to provide various configurations of the active forcing means, for example the one shown in figure 4.

In this case, the forcing means comprises five actuators 127, each similar to the actuator 27 disclosed previously.

The supporting structure of the bed 111 comprises a rail 124 that is similar to the rail 24 of the test bed 11 and a reinforced concrete base 140 on which the rail 124 is anchored.

The five active forces are chosen in such a way as to cause bending moments to the reference sections immediately below the five joints 19-23 that lighten the load on the joints due to the weight of the arm until the bending moments are inverted with a preset intensity.

When the forces have ceased, the joints are subjected only to the stress due to the weight of the arm.

The deformation suffered by the arm 12 is in this case greater by as much as the test frequency has to be suitably reduced (for example up to 0.1 Hz). About 12 days are thus required to run 100,000 cycles. Nevertheless, several set-ups do not need to be performed and the position of the actuators and connections does not need to be adjusted, as occurred with the test method disclosed with reference to figures 1 to 3.

The five forces are applied similarly and all five joints are tested in a single test phase.

The frequency and intensity of the active forces applied by the actuators is advantageously controlled through electronic control means 60, made according to *per* se known methods and shown schematically in figure 2.

The control means can be arranged for storing various stress profiles, depending on the type of test that it is desired to conduct, and in particular in function of the positioning of the active forces and the number thereof. The application profile of the force during each test cycle can be configured in various ways, as a step or also with other patterns.

For each of the test bed actuators, the control system 60 may receive load and stroke signals detected by suitable sensors of the actuator. With this control system it is also possible alternatively to give the actuator a stroke (or movement) or a loading (or force) law. It is possible to set sine control laws with constant width, or general laws over time.

It is fully understood that the "rectilinear rail" (previously indicated as 24) is here understood to be any rectilinear structure that is suitable for being anchored to the ground and enabling the connecting of the actuators.

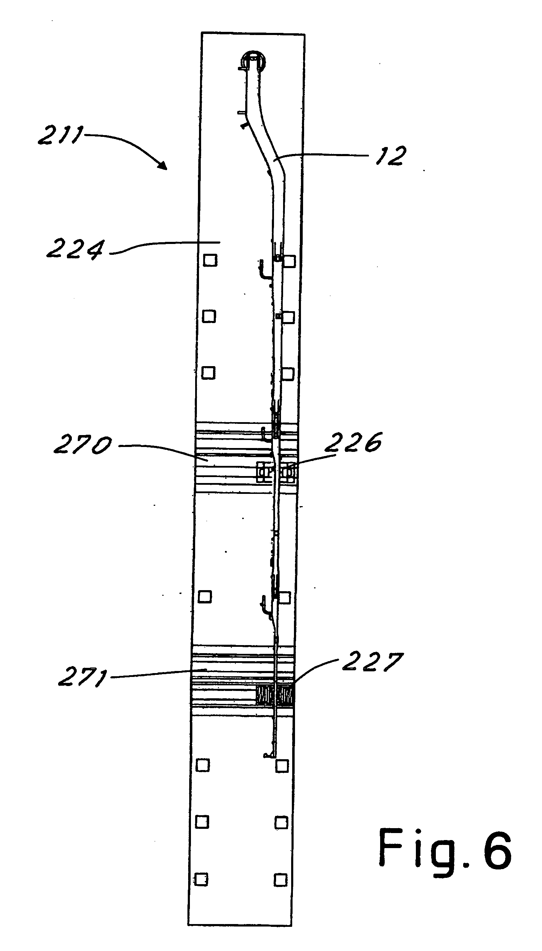

In the example in figure 6 there is shown a view from above of an alternative embodiment of a test bed 211. In this case the rail 224 of the supporting structure of the bed is made with plates anchored to the ground and arranged in a double row parallel to the arm 12. To the rail 224 a connecting structure 271 is connected to which there is fixed the actuator 227, similarly to the actuators already disclosed previously. The connecting structure 271 comprises guides that are transverse to the arm being tested to enable the position of the actuator to be adjusted transversely. A similar connecting structure 270 is arranged between the connecting member 226 and the rail 224.

At this point it is clear how the objects of the present invention have been achieved. In particular, a test bed has been provided that is able to conduct tests on distributing arms for distributing concrete in a rapid, simple and cheap manner, ensuring the full reliability of the arm from a mechanical point of view for the entire duration of the working life thereof.

A fast and cheap test method has been further provided that enables great reliability of the arm to be ensured for the entire duration of the working life thereof.

Naturally, the description made above of an embodiment applying the innovative principles of the present invention is given only by way of example of such innovative principles and must not therefore be taken to limit what is claimed herein.

For example, the test bed could also be used to test arms with a smaller number of portions. Alternatively, two active forces could be used simultaneously rather than one or five as disclosed previously. The forces are chosen in such a way as to produce a desired diagram of bending moments along the arm extension in such a way as to impart the preset cyclical stress to the critical sections near the joints.

Naturally, the distributing arm to be tested could also be made in a different manner from the manner disclosed above.

## Claims

1. Test bed for distributing arms for distributing concrete of the type comprising a plurality of portions (14-18) serially connected to one another in a jointed manner with an end portion of the arm connected in a jointed manner to a turret (13) of the arm, the test bed (11) comprising a supporting structure (24, 40) to which the turret of the arm is fixable during the test and active forcing means (25) suitable for applying at least a transverse force (F₁-F₅) with respect to the arm being tested to generate a preset bending moment (M₁-M₅) in at least a reference section (14a-18a) of the arm.

2. Test bed according to claim 1, **characterised in that** said forcing means (25) comprises at least one actuator (27) suitable for being connected mechanically between said arm and said supporting structure during the test.

3. Test bed according to claim 2, **characterised in that** said supporting structure comprises a rectilinear rail (24), said actuator (27) being connected during the test between said rail (24) and the arm to be tested.

4. Test bed according to claim 3, **characterised in that** said turret of the arm (13) is connected to an end of said rail (24) during the test.

5. Test bed according to claim 3, **characterised in that** said rail (24) is arranged horizontally.

6. Test bed according to claim 3, **characterised in that** said actuator (27) is fixed to the rail (24) in adjustable manner.

7. Test bed according to claim 3, **characterised in that** the supporting structure is suitable for supporting, during the test, the arm extended almost parallel to said rail (24).

8. Test bed according to claim 3, **characterised in that** said rail (224) consists of a plurality of adjacent plates anchored to the ground.

9. Test bed according to claim 3, **characterised in that** said actuators are connected to a connecting structure (271) anchored on the rail (224), the connection between the actuator and the connecting structure (271) having a position that is adjustable transversely to the extent of the arm.

10. Test bed according to claim 1, **characterised in that** the supporting structure is suitable for supporting, during the test, the arm extended in a rectilinear manner with an almost horizontal extent.

11. Test bed according to claim 10, **characterised in that** the forcing means (25) is suitable for producing a force (F₁-F₅) of an intensity such as to produce an inversion of the preset bending moment in said reference section (14a-18a) with respect to the preset bending moment (M_{1P}-M_{5P}) due to the weight of the arm with the arm horizontal.

12. Test bed according to claim 10, **characterised in that** said forcing means (27) is suitable for applying an upwardly facing force to the arm.

13. Test bed according to claim 1, **characterised in that** said forcing means (27) is suitable for applying a cyclical force to the arm, with a frequency comprised between 0.01 and 10 Hz.

14. Test bed according to claim 1, **characterised in that** it comprises connecting means (26) between the arm and the supporting structure (24) suitable for making a connection that is transverse to the arm in a point of the arm that is far from an application point of an active force.

15. Test bed according to claims 3 and 14, **characterised in that** said connecting means comprises a rod (26) and fixing means fixing ends of the rod respectively opposite the rail and the arm, the position of the rod being adjustable along the rail (24) and the arm.

16. Test bed according to claim 2, **characterised in that** said actuators (26) comprise a hydraulic actuator or an electromechanical actuator.

17. Test bed according to claim 3, **characterised in that** said actuator (26) is connected respectively to the arm and to the rail through hinging having an axis that is transverse to the rail (24).

18. Test bed according to claim 3, **characterised in that** said supporting structure (40) comprises a reinforced-concrete base on which said rail (24) is anchored.

19. Test bed according to claim 1, **characterised in that** it comprises electronic control means suitable for commanding the active forcing means by imposing a movement law of an application point of the force on the arm being tested.

20. Test bed according to claim 1, **characterised in that** it comprises electronic control means suitable for commanding the active forcing means by imposing a variation law varying the intensity of the force on the arm being tested.

21. Method for testing a distributing arm for di-stributing concrete of the type comprising portions (14-18) serially connected to one another in a jointed manner with an end portion connected in a jointed manner to a turret (13) of the arm, the method comprising the steps of providing a test bed (11) comprising a supporting structure (24, 40), fixing said turret (13) to said supporting structure and applying to the arm in a cyclical manner at least a force (F₁-F₅) that is transverse to the extent of the arm so as to cause preset bending moment (M₁-M₅) in at least a reference section of the arm.

22. Method according to claim 21, **characterised in that** the cyclical force (F₁-F₅) has an application frequency comprised between 0.01 Hz and 10 Hz.

23. Method according to claim 21, **characterised in that** it applies the force (F₁-F₅) to a portion of the arm and a connection (26) transverse to the arm on the preceding portion nearer the turret of the arm.

24. Method according to claim 23, **characterised in that** after applying the cyclical force and the connection that is transverse to the heads of a joint (19-23) between two portions, the procedure is repeated in sequence by applying force and a connection to the heads of all the other joints (19-23) of the arm.

25. Method according to claim 21, **characterised in that** the force (F₁-F₅) produces in at least the one reference section of the arm (14a-18a) a preset bending moment (M₁-M₅) such as to give the overall preset bending moment **in that** section (14a-18a) opposite values in the course of a test cycle.

26. Method according to claim 21, **characterised in that** said force is applied to the arm to be tested for more than 50,000 cycles, preferably for approximately 100,000 cycles.

27. Method according to claim 21, **characterised in that** the arm during the test is extended in a substantially horizontal rectilinear position.

28. Method according to claim 27, **characterised in that** the active forces (F₁-F₅) face vertically upwards.

29. Method according to claim 21, **characterised in that** the active force (F₁-F₅) is applied at the centre of gravity of a portion (14-18) of the arm.

30. Method according to claim 21, **characterised in that** the active force (F₁-F₅) oscillates cyclically between a maximum value and a nil value.

31. Method according to claim 21, **characterised in that** the active force is applied to the arm in such a way as to generate along the arm bending moments with an axis parallel to a rotation axis of the arm joints.

## Patentansprüche

1. Prüfstand für Verteilerarme zum Verteilen von Beton des Typs mit einer Anzahl von Abschnitten (14-18), die aufeinander folgend gelenkig miteinander verbunden sind, wobei ein Endabschnitt des Arms gelenkig mit einem Revolverkopf (13) des Arms verbunden ist, wobei der Prüfstand (11) eine Trägerstruktur (24, 40), an der der Revolverkopf des Arms während der Prüfung befestigbar ist, und ein aktives Zwangsmittel (25) aufweist, das dazu eingerichtet ist, wenigstens eine Querkraft (F₁-F₅) in Bezug auf den zu prüfenden Arm anzuwenden, um ein vorgegebenes Biegemoment (M₁-M₅) in wenigstens einem Referenzabschnitt (14a-18a) des Arms zu erzeugen.

2. Prüfstand nach Anspruch 1, **dadurch gekennzeichnet, dass** das Zwangsmittel (25) wenigstens ein Betätigungsteil (27) aufweist, das dazu eingerichtet ist, während der Prüfung zwischen dem Arm und der Trägerstruktur mechanisch verbunden zu sein.

3. Prüfstand nach Anspruch 2, **dadurch gekennzeichnet, dass** die Trägerstruktur eine gerade Schiene. (24) aufweist, wobei das Betätigungsteil (27) während der Prüfung zwischen der Schiene (24) und dem zu prüfenden Arm verbunden ist.

4. Prüfstand nach Anspruch 3, **dadurch gekennzeichnet, dass** der Revolverkopf des Arms (13) während der Prüfung mit einem Ende der Schiene (24) verbunden ist.

5. Prüfstand nach Anspruch 3, **dadurch gekennzeichnet, dass** die Schiene (24) horizontal angeordnet ist.

6. Prüfstand nach Anspruch 3, **dadurch gekennzeichnet, dass** das Betätigungsteil (27) verstellbar an der Schiene (24) befestigt ist.

7. Prüfstand nach Anspruch 3, **dadurch gekennzeichnet, dass** die Trägerstruktur dazu eingerichtet ist, während der Prüfung den sich fast parallel zu der Schiene (24) erstreckenden Arm zu tragen.

8. Prüfstand nach Anspruch 3, **dadurch gekennzeichnet, dass** die Schiene (224) eine Anzahl von nebeneinander liegenden, im Boden verankerten Platten aufweist.

9. Prüfstand nach Anspruch 3, **dadurch gekennzeichnet, dass** die Betätigungsteile mit einer auf der Schiene (224) verankerten Verbindungsstruktur (271) verbunden sind, wobei die Verbindung zwischen dem Betätigungsteil und der Verbindungsstruktur (271) eine Stellung aufweist, die quer zu der Erstreckung des Arms verstellbar ist.

10. Prüfstand nach Anspruch 1, **dadurch gekennzeichnet, dass** die Trägerstruktur dazu eingerichtet ist, während der Prüfung den sich gerade erstreckenden Arm mit einer fast horizontalen Erstreckung zu tragen.

11. Prüfstand nach Anspruch 10, **dadurch gekennzeichnet, dass** das Zwangsmittel (25) dazu eingerichtet ist, eine Kraft (F₁-F₅) mit einer derartigen Stärke zu erzeugen, dass eine Inversion des vorgegebenen Biegemoments in dem Referenzabschnitt (14a-18a) in Bezug auf das vorgegebene Biegemoment (M_{1P}-M_{5P}) wegen des Gewichts des Arms erreicht ist, wenn der Arm horizontal ist.

12. Prüfstand nach Anspruch 10, **dadurch gekennzeichnet, dass** das Zwangsmittel (27) dazu eingerichtet ist, den Arm mit einer nach oben gerichteten Kraft zu beaufschlagen.

13. Prüfstand nach Anspruch 1, **dadurch gekennzeichnet, dass** das Zwangsmittel (27) dazu eingerichtet ist, den Arm mit einer zyklischen Kraft mit einer Frequenz zwischen 0,01 und 10 Hz zu beaufschlagen.

14. Prüfstand nach Anspruch 1, **dadurch gekennzeichnet, dass** er ein Verbindungsmittel (26) zwischen dem Arm und der Trägerstruktur (24) aufweist, das dazu eingerichtet ist, eine Verbindung, die quer zu dem Arm verläuft, an einer Stelle des Arms herzustellen, die von einer Beaufschlagungsstelle einer aktiven Kraft entfernt ist.

15. Prüfstand nach den Ansprüchen 3 und 14, **dadurch gekennzeichnet, dass** das Verbindungsmittel einen Stab (26) und Befestigungsmittel aufweist, die die Enden des Stabs jeweils gegenüber der Schiene und des Arms befestigen, wobei die Stellung des Stabs entlang der Schiene (24) und des Arms verstellbar ist.

16. Prüfstand nach Anspruch 2, **dadurch gekennzeichnet, dass** die Betätigungsteile (26) ein hydraulisches Betätigungsteil oder ein elektromechanisches Betätigungsteil aufweisen.

17. Prüfstand nach Anspruch 3, **dadurch gekennzeichnet, dass** das Betätigungsteil (26) jeweils mit dem Arm und der Schiene über eine Gelenkverbindung verbunden ist, deren Achse quer zu der Schiene (24) verläuft.

18. Prüfstand nach Anspruch 3, **dadurch gekennzeichnet, dass** die Trägerstruktur (40) eine Stahlbetongrundfläche aufweist, auf der die Schiene (24) verankert ist.

19. Prüfstand nach Anspruch 1, **dadurch gekennzeichnet, dass** er elektronische Steuermittel aufweist, die dazu eingerichtet sind, das aktive Zwangsmittel so anzusteuern, dass sie eine Bewegungsregel von einer Beaufschlagungsstelle der Kraft auf den zu prüfenden Arm vorgeben.

20. Prüfstand nach Anspruch 1, **dadurch gekennzeichnet, dass** er elektronische Steuermittel aufweist, die dazu eingerichtet sind, das aktive Zwangsmittel so anzusteuern, dass sie eine Variationsregel vorgeben, die die Stärke der Kraft auf den zu prüfenden Arm variiert.

21. Verfahren zum Prüfen eines Verteilerarms zum Verteilen von Beton des Typs mit einer Anzahl von Abschnitten (14-18), die aufeinander folgend gelenkig miteinander verbunden sind, wobei ein Endabschnitt gelenkig mit einem Revolverkopf (13) des Arms verbunden ist, wobei das Verfahren die Schritte des Bereitstellens eines Prüfstands (11) mit einer Trägerstruktur (24, 40), des Befestigens des Revolverkopfs (13) an der Trägerstruktur und des zyklischen Beaufschlagens des Armes mit einer Kraft (F₁-F₅) aufweist, die quer zu der Erstreckung des Arms ist, um ein vorgegebenes Biegemoment (M₁-M₅) in wenigstens einem Referenzabschnitt des Arms zu erzeugen.

22. Verfahren nach Anspruch 21, **dadurch gekennzeichnet, dass** die zyklische Kraft (F₁-F₅) eine Beaufschlagungsfrequenz zwischen 0,01 Hz und 10 Hz aufweist.

23. Verfahren nach Anspruch 21, **dadurch gekennzeichnet, dass** die Kraft (F₁-F₅) einen Abschnitt des Armes beaufschlagt und eine Verbindung (26) herstellt, die quer zu dem Arm auf dem näher bei dem Revolverkopf des Arms liegenden Abschnitt ist.

24. Verfahren nach Anspruch 23, **dadurch gekennzeichnet, dass** nachdem die zyklische Kraft beaufschlagt und die Verbindung hergestellt wurde, die quer zu den Köpfen eines Gelenks (19-23) zwischen zwei Abschnitten liegt, das Vorgehen nacheinander wiederholt wird, indem mit einer Kraft beaufschlagt und eine Verbindung mit den Köpfen aller weiteren Gelenke (19-23) des Arms hergestellt wird.

25. Verfahren nach Anspruch 21, **dadurch gekennzeichnet, dass** die Kraft (F₁-F₅) in wenigstens einem Referenzabschnitt des Arms (14a-18a) ein vorgegebenes Biegemoment (M₁-M₅) erzeugt, um dem gesamten vorgegebenen Biegemoment in diesem Abschnitt (14a-18a) entgegengesetzte Werte im Verlauf eines Prüfzyklus zu geben.

26. Verfahren nach Anspruch 21, **dadurch gekennzeichnet, dass** der zu prüfende Arm für mehr als 50.000 Zyklen, vorzugsweise für etwa 100.000 Zyklen, mit der Kraft beaufschlagt wird.

27. Verfahren nach Anspruch 21, **dadurch gekennzeichnet, dass** der Arm sich während der Prüfung in einer im Wesentlichen horizontalen geraden Stellung erstreckt.

28. Verfahren nach Anspruch 27, **dadurch gekennzeichnet, dass** die aktiven Kräfte (F₁-F₅) senkrecht nach oben gerichtet sind.

29. Verfahren nach Anspruch 21, **dadurch gekennzeichnet, dass** die aktive Kraft (F₁-F₅) an dem Schwerpunkt eines Abschnitts (14-18) des Arms angewandt wird.

30. Verfahren nach Anspruch 21, **dadurch gekennzeichnet, dass** sich die aktive Kraft (F₁-F₅) periodisch zwischen einem Maximalwert und einem Nullwert ändert.

31. Verfahren nach Anspruch 21, **dadurch gekennzeichnet, dass** die aktive Kraft den Arm derart beaufschlagt, dass entlang des Arms Biegemomente mit einer Achse erzeugt werden, die parallel zu einer Drehachse der Armgelenke sind.

## Revendications

1. Banc d'essai pour bras de distributeur de béton, du type comprenant une pluralité de sections (14-18) reliées en série les unes aux autres par l'intermédiaire d'articulations, une extrémité du bras étant reliée par articulation à une tourelle (13) du bras, le banc d'essai (11) comprenant une structure porteuse (24, 40) sur laquelle peut être fixée la tourelle du bras pendant l'essai, et un moyen de forçage actif (25) apte à appliquer au moins une force transversale (F₁-F₅) par rapport au bras testé afin de générer un moment de flexion prédéfini (M₁-M₅) dans au moins une section de référence (14a-18a) du bras.

2. Banc d'essai selon la revendication 1, **caractérisé en ce que** ledit moyen de forçage (25) comprend au moins un vérin (27) pouvant être relié mécaniquement entre ledit bras et ladite structure porteuse pendant l'essai.

3. Banc d'essai selon la revendication 2, **caractérisé en ce que** ladite structure porteuse comprend un rail rectiligne (24), ledit vérin (27) étant relié pendant l'essai entre ledit rail (24) et le bras à tester.

4. Banc d'essai selon la revendication 3, **caractérisé en ce que** ladite tourelle du bras (13) est reliée à une extrémité dudit rail (24) pendant l'essai.

5. Banc d'essai selon la revendication 3, **caractérisé en ce que** ledit rail (24) est placé horizontalement.

6. Banc d'essai selon la revendication 3, **caractérisé en ce que** ledit vérin (27) est fixé au rail (24) de façon réglable.

7. Banc d'essai selon la revendication 3, **caractérisé en ce que** la structure porteuse est apte à supporter, pendant l'essai, le bras en extension presque parallèle audit rail (24).

8. Banc d'essai selon la revendication 3, **caractérisé en ce que** ledit rail (224) est constitué d'une pluralité de plaques adjacentes ancrées au sol.

9. Banc d'essai selon la revendication 3, **caractérisé en ce que** lesdits vérins sont reliés à une structure de liaison (271) ancrée sur le rail (224), la liaison entre le vérin et la structure de liaison (271) étant placée dans une position réglable transversalement à l'extension du bras.

10. Banc d'essai selon la revendication 1, **caractérisé en ce que** la structure porteuse est apte à supporter, pendant l'essai, le bras en extension rectiligne et presque horizontale.

11. Banc d'essai selon la revendication 10, **caractérisé en ce que** le moyen de forçage (25) est apte à produire une force (F₁-F₅) d'une intensité telle qu'elle produise une inversion du moment de flexion prédéfini dans ladite section de référence (14a-18a) par rapport au moment de flexion prédéfini (M_{1P}-M_{5P}), sous l'effet du poids du bras à l'horizontale.

12. Banc d'essai selon la revendication 10, **caractérisé en ce que** ledit moyen de forçage (27) est apte à appliquer au bras une force dirigée vers le haut.

13. Banc d'essai selon la revendication 1, **caractérisé en ce que** ledit moyen de forçage (27) est apte à appliquer au bras une force cyclique, d'une fréquence comprise entre 0,01 et 10 Hz.

14. Banc d'essai selon la revendication 1, **caractérisé en ce qu'**il comprend un moyen de liaison (26) entre le bras et la structure porteuse (24), apte à établir une liaison transversale au bras en un point du bras éloigné du point d'application d'une force active.

15. Banc d'essai selon les revendications 3 et 14, **caractérisé en ce que** ledit moyen de liaison comprend une tige (26) et un moyen de fixation qui fixe les extrémités de la tige respectivement situées face au rail et au bras, la position de la tige étant réglable le long du rail (24) et du bras.

16. Banc d'essai selon la revendication 2, **caractérisé en ce que** lesdits vérins (26) sont constitués d'un vérin hydraulique ou d'un vérin électromécanique.

17. Banc d'essai selon la revendication 3, **caractérisé en ce que** ledit vérin (26) est relié respectivement au bras et au rail par l'intermédiaire d'une articulation présentant un axe transversal au rail (24).

18. Banc d'essai selon la revendication 3, **caractérisé en ce que** ladite structure porteuse (40) est constituée d'une base en béton armé sur laquelle est ancré ledit rail (24).

19. Banc d'essai selon la revendication 1, **caractérisé en ce qu'**il comprend un moyen de commande électronique apte à commander le moyen de forçage actif en imposant une loi de déplacement du point d'application de la force exercée sur le bras testé.

20. Banc d'essai selon la revendication 1, **caractérisé en ce qu'**il comprend un moyen de commande électronique apte à commander le moyen de forçage actif en imposant une loi de variation faisant varier l'intensité de la force exercée sur le bras testé.

21. Procédé d'essai d'un bras de distributeur de béton, du type comprenant des sections (14-18) reliées en série les unes aux autres par l'intermédiaire d'articulations, et dont une extrémité est reliée par articulation à une tourelle (13) du bras, le procédé comprenant les étapes consistant à fournir un banc d'essai (11) comprenant une structure porteuse (24, 40), à fixer ladite tourelle (13) à ladite structure porteuse et à appliquer au bras de manière cyclique au moins une force (F₁-F₅) transversale à l'extension du bras, de manière à produire un moment de flexion prédéfini (M₁-M₅) dans au moins une section de référence du bras.

22. Procédé selon la revendication 21, **caractérisé en ce que** la force cyclique (F₁-F₅) possède une fréquence d'application comprise entre 0,01 Hz et 10 Hz.

23. Procédé selon la revendication 21, **caractérisé en ce qu'**il applique la force (F₁-F₅) à une section du bras et qu'il établit une liaison (26) transversale au bras sur la section précédente, plus proche de la tourelle du bras.

24. Procédé selon la revendication 23, **caractérisé en ce qu'**après l'application de la force cyclique et l'établissement de la liaison transversale aux têtes d'articulation (19-23) entre deux sections, la procédure se répète successivement en appliquant une force et en établissant une liaison aux têtes de toutes les autres articulations (19-23) du bras.

25. Procédé selon la revendication 21, **caractérisé en ce que** la force (F₁-F₅) produite au moins dans la section de référence du bras (14a-18a) un moment de flexion prédéfini (M₁-M₅) propre à donner au moment de flexion général prédéfini dans cette section (14a-18a) des valeurs opposées au cours d'un cycle d'essais.

26. Procédé selon la revendication 21, **caractérisé en ce que** ladite force est appliquée au bras à tester durant plus de 50 000 cycles, de préférence approximativement 100 000 cycles.

27. Procédé selon la revendication 21, **caractérisé en ce que** durant l'essai, le bras est en extension sensiblement rectiligne et horizontale.

28. Procédé selon la revendication 27, **caractérisé en ce que** les forces actives (F₁-F₅) sont dirigées à la verticale vers le haut.

29. Procédé selon la revendication 21, **caractérisé en ce que** la force active (F₁-F₅) est appliquée au centre de gravité d'une section (14-18) du bras.

30. Procédé selon la revendication 21, **caractérisé en ce que** la force active (F₁-F₅) oscille cycliquement entre une valeur maximale et une valeur nulle.

31. Procédé selon la revendication 21, **caractérisé en ce que** la force active est appliquée au bras de manière à générer le long de celui-ci des moments de flexion dont l'axe est parallèle à l'axe de rotation des articulations du bras.
